# EUROPÄISCHE PATENTANMELDUNG

(11) **EP 1 177 947 A2**
(43) Veröffentlichungstag der Anmeldung: **06.02.2002**
(21) Anmeldenummer: 01117344.0
(22) Anmeldetag: 18.07.2001
(51) Int. Cl.: B60R 1/074

(54) **Aussenrückblickspiegel für Kraftfahrzeuge**

(30) Priorität: 03.08.2000 DE 20013357 U
(71) Anmelder: Reitter & Schefenacker GmbH & Co. KG, 73730 Esslingen (DE)
(72) Erfinder: Romas, Vasile, 73730 Esslingen (DE)
(74) Vertreter: Kohl, Karl-Heinz

(57) **Zusammenfassung**

Der Außenrückblickspiegel hat einen Spiegelfuß (1), an dem ein Spiegelkopf gehalten ist. Er ist mit einem Antriebsmotor aus einer Gebrauchslage in eine Parkstellung schwenkbar. Der Antriebsmotor kann einfach und schnell am Spiegelfuß (1) befestigt werden, da der Antriebsmotor rastend am Spiegelfuß gehalten wird. Dadurch können Befestigungsteile als Sicherungsteile entfallen. Der Antriebsmotor läßt sich ohne besonderen Arbeitsaufwand auf den Spiegelfuß (1) aufsetzen und an diesem verrasten.

## Beschreibung

Die Erfindung betrifft einen Außenrückblickspiegel für Fahrzeuge, insbesondere für Kraftfahrzeuge, nach dem Oberbegriff des Anspruches 1.

Bei bekannten Außenrückblickspiegeln dieser Art wird der Spiegelkopf mittels eines Antriebsmotors aus der Gebrauchslage in die Parkstellung geschwenkt. Der Antriebsmotor wird hierzu am Spiegelfuß mit Schrauben befestigt. Die Befestigung des Antriebsmotors ist daher arbeits- und zeitaufwendig.

Der Erfindung liegt die Aufgabe zugrunde, einen Außenrückblickspiegel dieser Art so auszubilden, daß der Antriebsmotor einfach und schnell am Spiegelfuß befestigt werden kann.

Diese Aufgabe wird bei einem Außenrückblickspiegel der gattungsbildenden Art erfindungsgemäß mit den kennzeichnenden Merkmalen des Anspruches 1 gelöst.

Infolge der erfindungsgemäßen Ausbildung wird der Antriebsmotor über eine Rastverbindung am Spiegelfuß gehalten. Dadurch können Befestigungsteile, wie Schrauben oder dergleichen, als Sicherungsteile entfallen. Der Antriebsmotor läßt sich daher ohne besonderen Arbeitsaufwand einfach und schnell auf den Spiegelfuß aufsetzen und an diesem verrasten.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: einen Teil eines Spiegelfußes eines erfindungsgemäßen Außenrückblickspiegels in Draufsicht gemäß Pfeil I in Fig. 2,
- Fig. 2: den Spiegelfuß nach Fig. 1 in einem Schnitt längs der Linie II-II in Fig. 1,
- Fig. 3 und Fig. 4: einen Antriebsmotor für den erfindungsgemäßen Außenrückblickspiegel in unterschiedlichen perspektivischen Darstellungen.

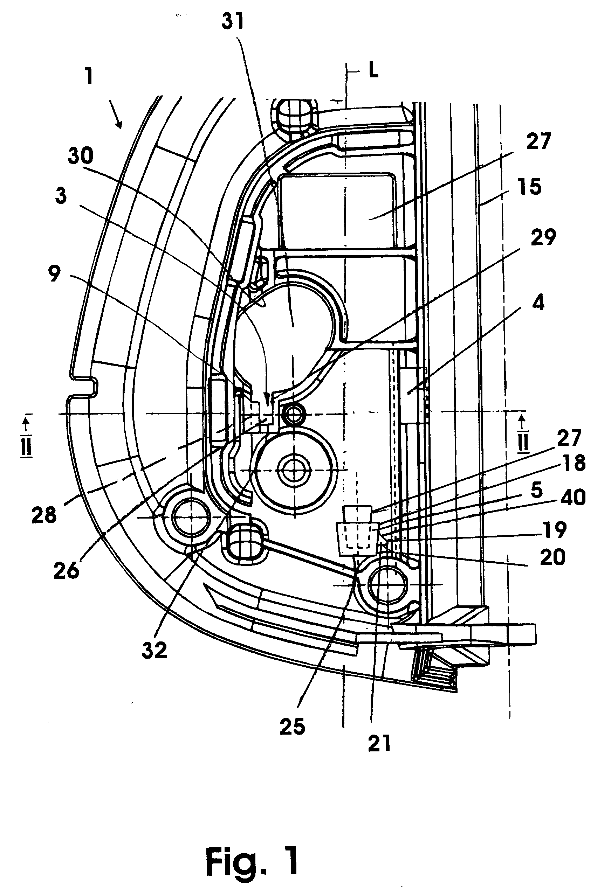

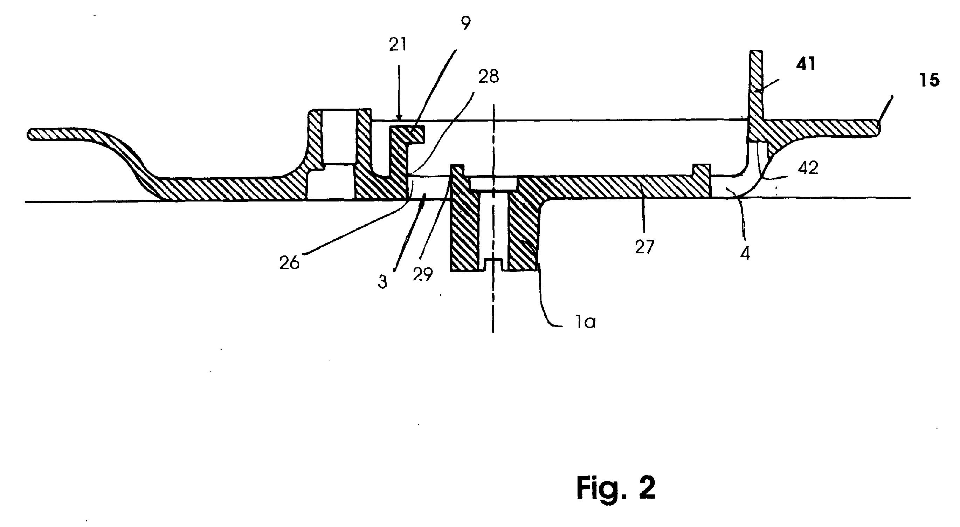

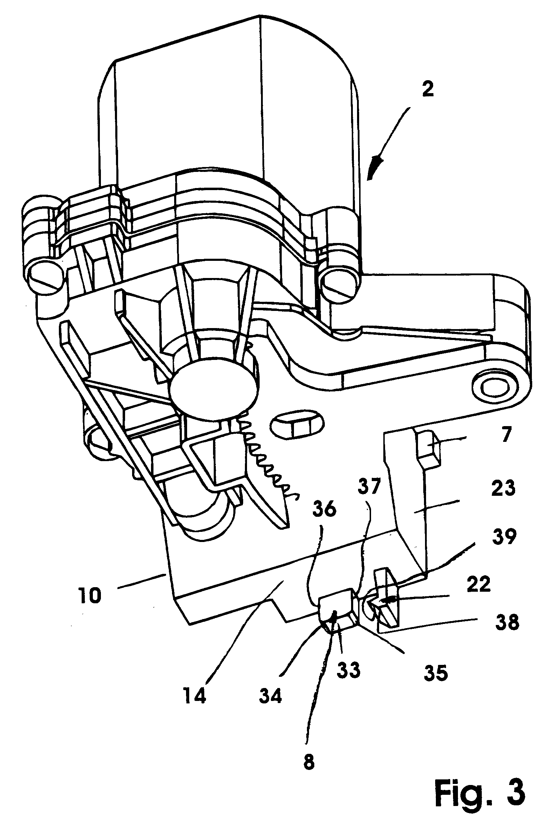

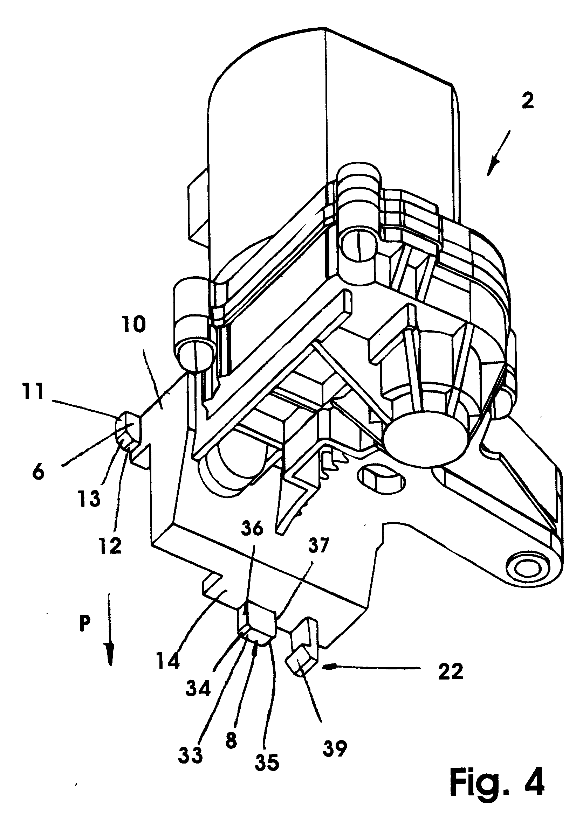

Der in den Fig. 1 bis 4 dargestellte Außenrückblickspiegel besteht in bekannter Weise aus einem Spiegelfuß 1 (Fig. 1 und 2) und einem (nicht dargestellten) Spiegelkopf, der mit einem Antriebsmotor 2 (Fig. 3 und 4) aus einer Gebrauchslage in eine Parkstellung geschwenkt werden kann. In dieser Lage liegt der Spiegelkopf an der Längsseite des Fahrzeuges. Der Spiegelfuß 1 wird über (nicht dargestellte) Schrauben an der Kraftfahrzeugtür verschraubt. Der Spiegelfuß 1 ist mit Schraubdomen 1a (Fig. 2) für den Durchtritt der Schrauben versehen.

Der in den Fig. 3 und 4 dargestellte Antriebsmotor 2 ist rastend am Spiegelfuß 1 gehalten. Hierzu weist der Spiegelfuß 1 im Ausführungsbeispiel drei Aufnahmen 3 bis 5 auf, in die der Antriebsmotor 2 mit entsprechenden Gegengliedern 6 bis 8 eingreift.

Die Aufnahme 3 des Spiegelfußes 1 hat eine in Längsrichtung L des Spiegelfußes sich erstreckende Öffnung 26 in einem Boden 27 des Spiegelfußes (Fig. 1 und 2). In Draufsicht gesehen (Fig. 1) hat die Öffnung 26 rechteckigen Umriß mit zwei parallel zueinander liegenden Längsrändern 28, 29, die an den Rand 30 einer Durchbrechung 31 des Bodens 27 anschließen. Am anderen Ende sind die Längsränder 28, 29 durch einen senkrecht zu ihnen verlaufenden Rand 32 miteinander verbunden.

Die Öffnung 26 wird über einen Teil ihrer Länge und Breite von einer Haltenase 9 übergriffen, die Abstand vom Boden 27 hat. Die Nase 9 übergreift in der Einbaulage das als Vorsprung ausgebildete Gegenglied 6 des Antriebsmotors 2. Es steht senkrecht von einer Seitenwand 10 (Fig. 3 und 4) des Antriebsmotors 2 ab und hat eine ebene Stirnseite 11, die über eine Abschrägung 13 in eine ebene Seitenwand 12 des Vorsprunges 6 übergeht, die ihrerseits senkrecht an die Seitenwand 10 des Antriebsmotors 2 anschließt. Der Vorsprung 6 erstreckt sich quer, im Ausführungsbeispiel senkrecht zur Längsrichtung L des Spiegelfußes 1.

Bei der Montage wird der Antriebsmotor 2 so an den Spiegelfuß 1 angesetzt, daß der Vorsprung 6 vor der Haltenase 9 liegt. Durch Verschieben des Antriebsmotors 2 in Längsrichtung L des Spiegelfußes 1 gelangt der Vorsprung 6 unter die Haltenase 9. Ihr Abstand von der Oberseite des Bodens 27 des Spiegelfußes 1 entspricht der Dicke des Vorsprunges 6. Dadurch ist der Antriebsmotor 2 gegen Abheben vom Spiegelfuß 1 gesichert. Vorteilhaft ist es, wenn der Bodenabstand der Haltenase 9 geringfügig kleiner als die Dicke des Vorsprunges 6 ist. Dann wird die Haltenase 9 beim Einschieben des Vorsprunges 9 elastisch verformt, so daß ein sicherer Halt des Antriebsmotors 2 gewährleistet ist. Die Abschrägung 13 am Vorsprung 6 dient als Einführschräge, so daß der Vorsprung 6 zuverlässig unter die Haltenase 9 gelangt.

Der Antriebsmotor 2 ist an seiner in Einschubrichtung P vorderen Wand 14 mit dem ebenfalls als Vorsprung ausgebildeten Gegenglied 8 versehen. Dieser Vorsprung 8 steht quer, vorzugsweise senkrecht von der Vorderwand 14 ab und liegt quer, vorzugsweise senkrecht zum Vorsprung 6. Der Vorsprung 8 hat eine ebene Stirnseite 33, die über jeweils eine Abschrägung 34, 35 in Seitenwände 36, 37 des Vorsprunges 8 übergeht. Die Seitenwände 36, 37 schließen senkrecht an die Vorderwand 14 des Antriebsmotors 2 an. Die beiden Vorsprünge 6, 8 liegen vorteilhaft auf gleicher Höhe.

Die dem Vorsprung 8 zugewandte Aufnahme 5 ist haubenförmig ausgebildet und überdeckt in Längsrichtung L des Spiegelfußes 1 einen Durchbruch 17 im Boden 27 teilweise (Fig. 1). Die Aufnahme 5 kann an ihrem in Einschubrichtung P vorderen Ende offen ausgebildet sein. Die Aufnahme 5 liegt mit geringerem Abstand von einem Längsrand 15 des Spiegelfußes 1 als die Aufnahme 3. Außerdem ist die Aufnahme 5 in Einschubrichtung P nach vorne gegenüber der Aufnahme 3 versetzt vorgesehen.

Über die dem Rand 15 zugewandte Seitenwand 18 der Aufnahme 5 ragt eine Rastnase 19. Sie hat in Draufsicht gemäß Fig. 1 dreieckigen Umriß und ist so vorgesehen, daß ihre Spitze 20 zum Längsrand 15 weist und ihre in Einschubrichtung P vordere Seitenwand 21 vorteilhaft senkrecht zum Rand 15 des Spiegelfußes 1 verläuft.

Eine Hakenspitze 38 des Rasthakens 22 ist gegen den Vorsprung 8 gerichtet und hat eine schräg zur Einschubrichtung P liegende Einführschräge 39, die beim Einschieben des Antriebsmotors 2 auf eine entsprechende Schrägfläche 40 des Rasthakens 22 trifft. Dadurch wird der Rasthaken 22 elastisch so weit gebogen, bis der Rasthaken 22 die Rastnase 19 der Aufnahme 5 hintergreift. Der Antriebsmotor 2 ist auf diese Weise gegen Zurückschieben entgegen Einschubrichtung P einwandfrei gesichert.

Die Aufnahme 4 liegt der Aufnahme 3, bezogen auf die Längsachse L des Spiegelfußes 1, gegenüber und wird durch einen Durchbruch im Spiegelfuß 1 gebildet. Die Aufnahme 4 hat in Draufsicht gemäß Fig. 1 rechteckigen Umriß und erstreckt sich in Längsrichtung L des Spiegelfußes 1. Wie Fig. 2 zeigt, erstreckt sich der Durchbruch 4 bis in einen aufsteigenden Randbereich 41 (Fig. 2). Dadurch wird eine parallel zur Oberseite des Spiegelfußes 1 liegende Sperrfläche 42 gebildet, die in der Einbaulage das als Vorsprung ausgebildete Gegenglied 7 übergreift. Es steht quer, vorzugsweise senkrecht von einer Seitenwand 23 des Antriebsmotors 2 ab und liegt in der gleichen Ebene wie die beiden anderen Vorsprünge 6 und 8.

Der Rastnase 19 ist ein Rasthaken 22 (Fig. 3 und 4) des Antriebsmotors 2 zugeordnet. Der Rasthaken 22 steht von der Vorderwand 14 des Antriebsmotors 2 senkrecht ab und liegt mit geringem Abstand benachbart zum Vorsprung 8.

Zur Montage wird der Antriebsmotor 2 so auf den Spiegelfuß aufgesetzt, daß die Vorsprünge 6 bis 8 vor den zugehörigen Aufnahmen 3 bis 5 liegen. Der Antriebsmotor 2 wird dann quer zur Einschubrichtung P so weit verschoben, daß der Vorsprung 7 in die Aufnahme 4 gelangt. Dadurch wird der Antriebsmotor 2 beim anschließenden Verschieben des Antriebsmotors 2 in Einschubrichtung P geführt, so daß die Vorsprünge zuverlässig in die Aufnahmen 3 und 5 gelangen und der Rasthaken 22 die Rastnase 19 hintergreift. Auf diese Weise ist der Antriebsmotor 2 einwandfrei am Spiegelfuß 1 gehalten. Er wird hierbei an drei mit Abstand voneinander liegenden, auf den Ecken eines gedachten Dreiecks liegenden Stellen auf dem Spiegelfuß in Einschubrichtung P gegen Lösen gesichert und gegen Abheben verriegelt. Dadurch hat der Antriebsmotor 2 am Spiegelfuß einen äußerst sicheren Halt. Die Montage des Antriebsmotors 2 kann sehr einfach und in kürzester Zeit durchgeführt werden, ohne daß zusätzliche Sicherungsteile erforderlich sind.

## Patentansprüche

1. Außenrückblickspiegel für Fahrzeuge, insbesondere für Kraftfahrzeuge, mit einem Spiegelfuß, an dem ein Spiegelkopf gehalten ist, der mit einem Antriebsmotor aus einer Gebrauchslage in eine Parkstellung schwenkbar ist,
**dadurch gekennzeichnet, daß** der Antriebsmotor (2) rastend am Spiegelfuß (1) gehalten ist.

2. Spiegel nach Anspruch 1,
**dadurch gekennzeichnet, daß** der Antriebsmotor (2) über eine Steck- und Rastverbindung am Spiegelfuß (1) gehalten ist.

3. Spiegel nach Anspruch 1 oder 2,
**dadurch gekennzeichnet, daß** der Spiegelfuß (1) mindestens eine, vorzugsweise drei Aufnahmen (3 bis 5) für ein Gegenglied (6 bis 8) des Antriebsmotors (2) aufweist.

4. Spiegel nach einem der Ansprüche 1 bis 3,
**dadurch gekennzeichnet, daß** mindestens die erste Aufnahme (3) ein Halteteil (9), vorzugsweise eine Haltenase aufweist, die das zugehörige Gegenglied (6) des Antriebsmotors (2) übergreift.

5. Spiegel nach einem der Ansprüche 1 bis 4,
**dadurch gekennzeichnet, daß** in die zweite Aufnahme (4) ein als Vorsprung ausgebildetes Gegenglied (7) des Antriebsmotors (2) ragt.

6. Spiegel nach einem der Ansprüche 1 bis 5,
**dadurch gekennzeichnet, daß** die dritte Aufnahme (5), die vorteilhaft das als Vorsprung ausgebildete Gegenglied (8) des Antriebsmotors (2) aufnimmt, haubenförmig ausgebildet ist, vorzugsweise u-förmigen Querschnitt aufweist.

7. Spiegel nach einem der Ansprüche 1 bis 6,
**dadurch gekennzeichnet, daß** der Antriebsmotor (2) wenigstens einen Rasthaken (22) aufweist, der eine vorteilhaft an der dritten Aufnahme (5) vorgesehene Rastnase (19) des Spiegelfußes (1) hintergreift.

8. Spiegel nach einem der Ansprüche 1 bis 7,
**dadurch gekennzeichnet, daß** die Aufnahmen (3 bis 5) in den Ekken eines gedachten Dreiecks vorgesehen sind.

9. Spiegel nach einem der Ansprüche 1 bis 8,
**dadurch gekennzeichnet, daß** die erste und dritte Aufnahme (3 und 5) entgegen Einschubrichtung (P) offen sind.

10. Spiegel nach einem der Ansprüche 1 bis 9,
**dadurch gekennzeichnet, daß** die zweite Aufnahme (4) das als Vorsprung ausgebildete Gegenglied (7) übergreift.

11. Spiegel nach einem der Ansprüche 1 bis 10,
**dadurch gekennzeichnet, daß** die erste Aufnahme (3) etwa auf gleicher Höhe wie die zweite Aufnahme (4) angeordnet ist.

12. Spiegel nach einem der Ansprüche 1 bis 11,
**dadurch gekennzeichnet, daß** die dritte Aufnahme (5) in Einschubrichtung (P) des Antriebsmotors (2) vor den beiden anderen Aufnahmen (3, 4) vorgesehen ist.
